Europäisches Patentamt

European Patent Office

Office européen des brevets

(11) Publication number: **0 360 555**
**A1**

(12) # EUROPEAN PATENT APPLICATION

(21) Application number: **89309498.7**

(22) Date of filing: **19.09.89**

(51) Int. Cl.5: **C 01 C 3/10**

(30) Priority: **21.09.88 US 247400**

(43) Date of publication of application:
**28.03.90 Bulletin 90/13**

(84) Designated Contracting States:
**AT BE CH DE ES FR GB GR IT LI LU NL SE**

(71) Applicant: **E.I. DU PONT DE NEMOURS AND COMPANY**
**1007 Market Street**
**Wilmington Delaware 19898 (US)**

(72) Inventor: **Porter, Harold Felton**
**442 Bishop Drive**
**Hockessin Delaware 19707 (US)**

(74) Representative: **Woodcraft, David Charles et al**
**BROOKES & MARTIN High Holborn House 52/54 High Holborn**
**London, WC1V 6SE (GB)**

(54) **Process for preparing sodium cyanide.**

(57) A process for producing sodium cyanide by reacting hydrogen cyanide gas with large porous sodium carbonate is disclosed. The reaction is carried out at from 200-500° C. The sodium carbonate particles having a particle size of greater than 0.1 inch (2.5 X 10⁻³ m) and a pore volume of 0.1-0.4 cc/g NaCO₃. Preferably the reaction is carried out counter currently.

EP 0 360 555 A1

Bundesdruckerei Berlin

## Description

# PROCESS FOR PREPARING SODIUM CYANIDE

### BACKGROUND OF THE INVENTION

Field of the Invention

The present invention relates to a process for preparing sodium cyanide from dry sodium carbonate such as soda ash.

Prior Art

German 145,748 discloses reacting hydrocyanic acid with sodium carbonate.

U.S. 1,672,449 discloses reacting hydrocyanic acid with sodium carbonate.

French 728,719 discloses reacting hydrocyanic acid with sodium carbonate.

British 398,732 discloses reacting hydrocyanic acid with sodium carbonate wherein the sodium carbonate is obtained by dehydrating $Na_2CO_3 \cdot 10H_2O$.

British 442,528 discloses reacting hydrogen cyanide with sodium carbonate, removing water vapor from the resulting mixture of gases, and recycling the dried gases.

British 836,823 discloses reacting hydrocyanic acid with sodium carbonate and mentions the use of sodium carbonate which has been prepared by calcination of sodium bicarbonate which at relatively low temperatures.

### SUMMARY OF THE INVENTION

The present invention involves counter-current contacting of reactive sodium carbonate particles of adequate size to avoid caking with a gas stream containing 5-25% hydrogen cyanide at a temperature of 200-500°C. The reactive sodium carbonate particles are obtained by either compaction of sodium sesquicarbonate or bicarbonate to desired particle size, or size reduction of natural trona; said particles being calcined and reacted in a counter-current flow reactor.

Detailed Description

The reaction,

$$Na_2CO_3 + 2HCN \rightleftharpoons 2NaCN + CO_2 + H_2O$$

is reversible but proceeds to the right at workable velocities at temperatures between 200° and 500°C. The reaction is endothermic to the extent of about 10,000 calories per gram mole of sodium cyanide. Reaction rate decreases as the ratio of HCN to $CO_2$ and water in the gas in contact with the solids decreases. Since sodium carbonate is a particulate solid, the reaction involves diffusion of HCN into the interior of the particles and diffusion of the gaseous reaction products, $CO_2$ and $H_2O$, out. Consequently, reaction rate is affected by the structure of the particles involved.

While sodium carbonate and sodium cyanide both have melting points above the range of efficient operation (850°C and 565°C respectively), mixtures, of course, melt at lower temperatures. The eutectic mixture of about 65% sodium cyanide melts at 450°C. As frequently occurs with solid materials, fine particles of both sodium carbonate and sodium cyanide soften at temperatures well below their melting points. This results in agglomeration of particulates and fouling of process equipment.

The possibility of production of sodium cyanide from HCN and soda ash has been extensively investigated throughout this century. Many patents have been issued and literature references are numerous. However, the process has not been commercialized. The major attraction has been process simplicity and, in many cases, lower raw material costs. The problems inhibiting commercialization center around overcoming the sticky nature of the particulate solids under process conditions and transfer of heat required to drive the endothermic reaction. Another difficulty has been the availability of a source of suitable sodium carbonate. The usual products of commerce are "light soda ash" and "dense soda ash." Light soda ash is produced by calcination of sodium bicarbonate. Decomposition of the $NaHCO_3$ crystal results in a particle having a porous structure which is ideal insofar as reaction rate and conversion is concerned. However, large bicarbonate crystals are not produced on a commercial scale and, consequently, "light soda ash" is of small particle size which creates difficulties in the gas/solids contacting equipment necessary for conducting the reaction. "Dense soda ash" is normally produced by dehydration of sodium carbonate monohydrate.

The monohydrate crystals are much larger than the bicarbonate crystals. Consequently, "dense soda ash" particles are much larger but have relatively low pore volume and are unsuitable for production of sodium cyanide. In recent years there has been some small production of an intermediate product made by calcination of sodium sesquicarbonate ($Na_2CO_3 \cdot NaHCO_3 \cdot 2H_2O$). This material is reasonably porous but somewhat less so than regular "light soda ash." The particle size is intermediate between standard light and dense soda ash. The calcined sesquicarbonate can perform reasonably well as far as reaction rate is concerned. However, it has not been widely available.

It has now been discovered that the tendency of particles to adhere together and adhere to process equipment throughout the operating range of temperature can be essentially eliminated by control of the particle size of the sodium carbonate raw material. Larger particle size raw material also offers other advantages. It greatly increases flexibility in selecting method and equipment used for gas/solid contacting. Dust problems can be largely eliminated. In most cases transfer of the endothermic heat of reaction to the reacting particulates is facilitated. The resulting larger particle size sodium cyanide product is more desirable and can eliminate the need for further size enlargement steps to avoid shipping and storage problems with this highly hygroscopic material.

It has now been found that there is a minimum particle size of soda ash where adherence of particles can be avoided. While this minimum size will depend somewhat on process conditions, HCN gas composition, temperature range, gas/solid contacting method, and particle shape, particles having general dimensional uniformity with a diameter greater than 0.1 inch (2.5 X $10^{-3}$m) perform satisfactorily. Generally a diameter of 3 inches is about the maximum that can be used.

As would be expected, complete conversion of larger soda ash particles requires a longer exposure time since the paths for diffusion are longer. However, this disadvantage is more than compensated by the applicability of types of contacting equipment not suited to processing of fine particles as well as some of the other advantages previously mentioned.

The practical method for obtaining larger particulate sodium carbonate is through application of size enlargement technology to suitable, available, commercial raw materials. As discussed above, suitable soda ash will be either the "light ash" produced from calcination of sodium bicarbonate or the intermediate density ash from calcination of the sesquicarbonate.

Suitable size enlargement technology includes the following general methods:

1. Compaction which to produce particles in the form of briquettes, sheets, flakes, and the like which, if necessary, can be size reduced to specifications.

2. Agglomeration, where the small particles are formed into spheroids, such as by means of a liquid binder. In the case of soda ash the binder normally would be a solution of sodium carbonate. Particle size can be controlled by operating techniques which are well known.

3. Agglomeration by incipient fusion where size enlargement occurs as a result of particles adhering together as their melting point is approached.

There are two effects which reduce the tendency of larger particles to adhere together forming lumps. One is the tendency of small particles to agglomerate as compared to larger particles. The contact area is much greater per unit volume for small particles; therefore, the small particles form much stronger agglomerates which have little tendency to deagglomerate. The second effect is that larger particles become quickly coated with a distinctive outer layer of essentially pure sodium cyanide. This outer layer, being essentially pure sodium cyanide, has a higher melting point than material in the center of the particle where various mixtures of cyanide and carbonate occur as the reaction proceeds. The outer layer thus protects the article from becoming sticky. Very small particles cannot be protected from becoming sticky because the entire particle is converted to cyanide much more rapidly, and a distinctive outer layer does not develop.

While the process can be operated efficiently well below the melting point of even the eutectic mixture, small particles are sticky at all practical operating temperatures; and stickiness increases with temperature.

Counter-current contacting with heat of reaction supplied from the gas stream results in the soda ash first contacting relatively low temperature gas where the protective coating of cyanide is formed before higher temperatures are encountered. This is ideal for avoiding stickiness.

While size enlargement can enhance any type of reaction wherein sodium cyanide is produced from HCN gas and solid carbonate, it can most advantageously be employed where HCN concentration in the gas is relatively low.

The preferred source of hydrogen cyanide for this process is from the Andrussow or similar high temperature, catalytic processes which produce gases containing 5-30% HCN. These gases are readily available at the temperature required for efficient operation. The relatively low HCN concentration is consistent with the desired temperature profile and material and heat balance conditions required in the process when the gas/solid contacting is counter-current. Higher gas concentrations may result in the necessity to supply part of the heat of reaction by indirect means which is both difficult and costly for the temperature range involved and usually cannot be successfully performed without creating sticky conditions. An especially preferred source of hydrogen cyanide is the spent gas from an acrylonitrile plant.

An especially preferred source of hydrogen cyanide is the by-product hydrogen cyanide from the Sohio Acrylonitrile process. In this application, the HCN stream from the acrylonitrile "Head Column" is contacted with soda ash without great concern for conversion of HCN. The adsorption off-gas is returned to the acrylonitrile process absorber for recovery of HCN, which recycles, while carbon dioxide is eliminated along with waste gases from the acrylonitrile process. The increase in load on the acrylonitrile process columns involved is very minor.

The reactor may be any type of gas/solids contacting equipment capable of counter-current operation. The particle size of the raw material will be determined by reactor type, product specifications, and possibly other factors. Applicable types of reactors are staged fluidized beds, vertical shaft reactors, rotary and rotating contractors, through circulation conveyor reactors, and possibly others.

3

As previously mentioned, this process involves diffusion; and therefore, it is necessary that the particles of sodium carbonate raw material have a porous structure in order to achieve viable rates of reaction.

While anhydrous sodium carbonate can be crystallized from solution, this is not practiced in commercial production of soda ash. Commercial processes crystallize a precursor material followed by conversion to sodium carbonate by heating. Consequently, the commercial soda ash particles are all pseudomorphs, i.e., they have the same shape and size as the original precursor crystals but are actually skeletons produced by removal of water or crystallization and/or carbon dioxide. Calculated pore volume of sodium carbonate pseudomorphs is illustrated in Table I.

Table I

| Precursor Crystal | Precursor Crystal Density g/cc | Precursor Specific Volume cc/g |
|---|---|---|
| $Na_2CO_3$ | 2.532 | 0.3949 |
| $Na_2CO_3 \cdot H_2O$ | 2.250 | 0.4444 |
| $Na_2CO_3 \cdot NaHCO_3 \cdot 2H_2O$ | 2.112 | 0.4735 |
| $NaHCO_3$ | 2.159 | 0.4632 |

| Precursor Crystal | Pore Volume Due to Decomposition cc/g Precursor | Pore Volume in Pseudomorph cc/g $Na_2CO_3$ |
|---|---|---|
| $Na_2CO_3$ | -- | -- |
| $Na_2CO_3 \cdot H_2O$ | 0.5199 | 0.1250 |
| $Na_2CO_3 \cdot NaHCO_3 \cdot 2H_2O$ | 0.6731 | 0.2782 |
| $NaHCO_3$ | 0.7341 | 0.3392 |

Laboratory reaction tests indicate that reaction rate is proportional to effective pore volume. The pore volume in the sodium carbonate being treated should be from 0.1-0.4 cc/g $Na_2CO_3$.

It has now been discovered that freshly calcined bicarbonate and sesquicarbonate is much more reactive than the commercial soda ash produced by calcination of these materials. By freshly calcined is meant calcined by heating followed immediately by contact with gases containing hydrogen cyanide at normal reaction temperatures (higher than 200°C). Dependent upon particle size of the reacting material, reaction rate for fresh calcined material can be as much as an order of magnitude higher than the respective soda ash products which have been subjected to storage and shipment following their calcination.

The reason for loss of activity as a result of storage and shipment is not completely understood. However, surface area measurements indicate a very large reduction in surface area at smaller pore radii, for samples which have been stored, with very little change in total pore volume. This would indicate that the aging somehow results in the small radius pores becoming plugged. Anhydrous sodium carbonate is hygroscopic and will absorb water from atmospheric air at ambient temperatures forming hydrates. These hydrates apparently completely plug some small radius pores while larger radius pores remain open. Normal materials handling procedures permit considerable contact with air. Also, some moist gas can be entrained in the particulate solids as they are discharged from the calcination steps. The process gas can contain some carbon dioxide as well as water. As the soda ash cools, carbon dioxide can also be absorbed forming sodium bicarbonate which could have the same pore closing effect as a hydrate formation. The very small quantity of water or carbon dioxide absorption required to materially effect activity is not be readily detected by chemical analysis. While the reaction rate is greatly reduced for sodium carbonate which has experienced the aging effect as compared to freshly calcined product, it is possible to achieve high conversion with sufficient contact time.

Another suitable source of sodium carbonate is the mineral trona. Trona is natural sodium sesquicarbonate. Deposits exist throughout the world. The best known and most extensive deposit is located in western Wyoming near the town of Green River. This deposit is currently being mined and processed to produce soda ash.

Natural trona is of massive crystalline structure. The material as mined usually contains some sodium chlorides and sulfates and, of course, insolubles. The Wyoming product is unusually pure insofar as soluble impurities are concerned but mining methods contribute some insolubles. However, grinding and screening can result in a raw material of any desired particle size reasonably low in insolubles.

It has now been found that calcined, natural trona is a suitable form of sodium carbonate for production of sodium cyanide by reaction with gaseous hydrogen cyanide. It has essentially the same reaction characteristic as the soda ash produced by calcination of synthetic sesquicarbonate.

Table II is a tabulation of series of laboratory experiments which serve to compare the relative reactivity of a variety of sodium carbonate products of different particle size. These tests were all conducted by contacting the sodium carbonate products with a large excess of gas containing 5% hydrogen cyanide and 95% nitrogen for a specified time period and temperature. The assay obtained is a measure of reactivity. The cementing or caking of the particles, if any, is noted.

Table II

| Type NaCO<sub>3</sub> Used | Form | Average Particle Size Inch | Process Temp. °C. | Time Hours | Assay % NaCN | Caking |
|---|---|---|---|---|---|---|
| Bicarbonate Freshly Calcined | Powder | 0.0076 | 325 | 0.5 | 73.1 | No |
| Commercial Light Soda Ash | Powder | 0.0081 | 325 | 0.5 | 54.4 | No |
| Pure Sesquicarbonate Freshly Calcined | Powder | 0.0086 | 325 | 0.5 | 30.3 | No |
| | Briquettes | 1cc | 325 | 0.5 | 36.0 | No |
| Commercial Soda Ash From Sesquicarbonate | Powder | 0.0079 | 325 | 1.0 | 91.0 | Yes |
| | Powder | 0.0079 | 325 | 0.5 | 52.9 | Yes |
| | Chunks | 0.0231 | 325 | 1.0 | 73.0 | Yes |
| | Chunks | 0.0331 | 325 | 1.0 | 34.1 | Yes |
| | Chunks | 0.0787 | 325 | 1.0 | 42.9 | Yes |
| | Chunks | 0.0937 | 325 | 1.0 | 22.0 | Yes |
| | Briquettes | 1cc | 325 | 1.0 | 9.0 | No |
| Commercial Dense Soda Ash from Nonohydrate | Powder | 0.0073 | 325 | 0.5 | 28.5 | Yes |
| | Powder | 0.0098 | 325 | 0.5 | 39.0 | Yes |
| Natural Trona Freshly Calined | Chunks | 0.0800 | 325 | 1.0 | 70.0 | No |
| Calcined Natural Trona | Chunks | 0.0800 | 325 | 1.0 | 60.0 | No |

The following is a description of forming briquettes.

The bench scale work was performed with a Komarck Research Model B-100A Briquetter. The press was equipped with B-122-5 rolls which have 32 - 1cc pockets cut into the one inch wide working face; and the rolls were operated at 4 revolutions per minute. The test was done using commercial anhydrous sodium carbonate made from sesquicarbonate which had a bulk density of 0.79 g/cc and a tapped density of 0.99. The roll was set at 2.5 amperes. The feeder setting was 4-1/4. The feeder was set at 2.45 amperes. The pocket pressure was 10.8 TSI. The production rate was 40 pounds per hour. The average briquette weight was 2.39 grams.

## Claims

1. A process for the production of sodium cyanide comprising contacting non-caking sodium carbonate particles having an average particle size of greater than about 0.1 inch and a porosity of 0.1-0.4 cc per gram of sodium carbonate with a gas containing from 5-30 volume percent hydrogen cyanide at a temperature of 200-500°C.

2. The process of Claim 1 wherein sodium carbonate particles are contacted with the hydrogen cyanide containing gas counter currently.

3. The process of Claim 2 wherein the sodium carbonate particles having a particle size of from 0.1-3 inch.

4. The process of Claim 3 wherein the temperature is from 250-350°C.

5. The process of Claim 4 wherein the sodium carbonate is produced by in-line calcination of sodium bicarbonate.

6. The process of Claim 4 wherein the sodium carbonate is produced by in-line calcination of sodium sesquicarbonate.

7. The process of Claim 6 wherein the sodium carbonate is in the form of a briquette.

8. The process of Claim 4 wherein the sodium carbonate is produced inline by calcination of natural trona.

9. The process of Claim 4 wherein the stream containing the hydrogen cyanide is from an acrylonitrile plant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE-C- 611 540 (HENE) <br> * Claim; page 1, line 56 - page 2, line 5 * <br> --- | 1,4,5 | C 01 C 3/10 |
| D,A | GB-A- 836 823 (DEGUSSA) <br> * Claims 1,6; figure * <br> --- | 1,2 | |
| A | US-A-2 125 377 (HOSKING) <br> * Claims 1,9; page 1, right-hand column, lines 1-5 * <br> --- | 1,5,6 | |
| A | DE-A- 625 589 (KOHLENTECHNIK) <br> * Claim; example 2 * <br> --- | 1 | |
| A | US-A-3 329 582 (SENNEWALD) <br> * Whole document * <br> ----- | 9 | |

TECHNICAL FIELDS
SEARCHED (Int. Cl.5)

C 01 C 3/00

The present search report has been drawn up for all claims

| Place of search | Date of completion of the search | Examiner |
|---|---|---|
| THE HAGUE | 15-12-1989 | ZALM W.E. |